# EUROPEAN PATENT SPECIFICATION

(11) **EP 2 496 668 B1**
(45) Date of publication and mention of the grant of the patent: **21.03.2018**
(21) Application number: 10774385.8
(22) Date of filing: 27.10.2010
(51) Int. Cl.: C10G 9/00, B01J 8/34, B01J 8/00, C10B 43/14, B01J 8/18, C10B 55/10, B01J 8/24

(54) **USE OF A FLUID COKING UNIT STRIPPER**
VERWENDUNG VON EINER STRIPPER ENTHALTENDE WIRBELSCHICHTVERKOKUNG
UTILISATION D'UNE COLONNE DE RECTIFICATION D'UNITÉ DE COKÉFACTION FLUIDE

(30) Priority: 01.02.2010 US 300272 P; 06.11.2009 US 280625 P
(43) Date of publication of application: 12.09.2012
(73) Proprietor: ExxonMobil Research and Engineering Company, Annandale, NJ 08801-0900 (US)
(72) Inventor: DAVULURI, Rathna, P., Fairfax, VA 22030 (US); BIELENBERG, James, R., Houston, TX 77055-7520 (US); SUTTON, Clay, R., Redondo Beach, CA 90278 (US); RAICH, Brenda, A., Annandale, NJ 08801 (US)
(74) Representative: ExxonMobil Chemical Europe Inc.
(86) International application number: PCT/US2010/054215
(87) International publication number: WO 2011/056628

(56) References cited:
- WO-A1-2007/126803
- DE-B- 1 001 789
- US-A- 2 865 847
- US-A- 2 886 510
- US-A- 4 587 010

## Description

### FIELD OF THE INVENTION

This invention relates the use of an improved stripper section for mitigating fouling and hydrocarbon carryunder in fluidized bed coking units.

### BACKGROUND OF THE INVENTION

Fluidized bed coking (fluid coking) is a petroleum refining process in which heavy petroleum feeds, typically the non-distillable residue (resid) from fractionation, are converted to lighter, more useful products by thermal decomposition (coking) at elevated reaction temperatures, typically about 480 to 590°C, (about 900 to 1100°F). The process is carried out in a unit with a large reactor vessel containing hot coke particles which are maintained in the fluidized condition at the required reaction temperature with steam injected at the bottom of the vessel. The heavy oil feed is heated to a pumpable temperature, mixed with atomizing steam, and fed through a number of feed nozzles to the reactor. The steam injected at the bottom of the reactor into the stripper section passes upwards through the coke particles in the stripper as they descend from the main part of the reactor above. A part of the feed liquid coats the coke particles and subsequently decomposes into layers of solid coke and lighter products which evolve as gas or vaporized liquid. The light hydrocarbon products of the coking reaction vaporize, mix with the fluidizing steam and pass upwardly through the fluidized bed into a dilute phase zone above the dense fluidized bed of coke particles. This mixture of vaporized hydrocarbon products formed in the coking reactions continues to flow upwardly through the dilute phase with the steam at superficial velocities of about 1 to 2 metres per second (about 3 to 6 feet per second), entraining some fine solid particles of coke. Most of the entrained solids are separated from the gas phase by centrifugal force in one or more cyclone separators, and are returned to the dense fluidized bed by gravity through the cyclone diplegs. The mixture of steam and hydrocarbon vapor from the reactor is subsequently discharged from the cyclone outlets and quenched by contact with liquid descending over scrubber sheds in a scrubber section. A pumparound loop circulates condensed liquid to an external cooler and back to the top row of scrubber section to provide cooling for the quench and condensation of the heaviest fraction of the liquid product. This heavy fraction is typically recycled to extinction by feeding back to the fluidized bed reaction zone.

Components of the feed that are not immediately vaporized coat the coke particles in the reactor and are subsequently decompose into layers of solid coke and lighter products which evolve as gas or vaporized liquids. During the contacting of the feed with the fluidized bed, some coke particles may become unevenly or too heavily coated with feed and during collision with other coke particles may stick together. These heavier coke particles may not be efficiently fluidized by the steam injected into the bottom of stripper section so that they subsequently pass downwards from the reactor section into the stripper section where they may adhere to and build up on the sheds in the stripper section, mainly on the uppermost rows of sheds. Accumulation of deposits on the stripper sheds can become so severe due to growth of the deposits into the open area between the sheds on the row above as to restrict fluidization of the coke in the reactor section and eventually shut the unit down.

The solid coke from the reactor, consisting mainly of carbon with lesser amounts of hydrogen, sulfur, nitrogen, and traces of vanadium, nickel, iron, and other elements derived from the feed, passes through the stripper and out of the reactor vessel to a heater where it is partly burned in a fluidized bed with air to raise its temperature from about 480 to 700° C (about 900° to 1300° F), after which the hot coke particles are recirculated to the fluidized bed reaction zone to provide the heat for the coking reactions and to act as nuclei for the coke formation.

The Flexicoking™ process, developed by Exxon Research and Engineering Company, is, in fact, a fluid coking process that is operated in a unit including a reactor and heater as described above but also including a gasifier for gasifying the coke product by reaction with an air/steam mixture to form a low heating value fuel gas. The heater, in this case, is operated with an oxygen depleted environment. The gasifier product gas, containing entrained coke particles, is returned to the heater to provide a portion of the reactor heat requirement. A return stream of coke sent from the gasifier to the heater provides the remainder of the heat requirement. Hot coke gas leaving the heater is used to generate high-pressure steam before being processed for cleanup. The coke product is continuously removed from the reactor. In view of the similarity between the Flexicoking process and the fluid coking process, the term "fluid coking" is used in this specification to refer to and comprehend both fluid coking and Flexicoking except when a differentiation is required, as in the discussion of stripper problems below.

The stripping section of the fluid coking unit is located in the lower portion of the reactor. Coke particles from the reactor pass into the stripper where they are contacted with stripping steam from a sparger located at the bottom of the stripping section in order to remove hydrocarbon vapor phase products from the coke which is carried out of the bottom of the unit. As a result of the well-mixed nature of the reactor, a certain amount of coke entering the stripper is still coated with crackable hydrocarbon material. For this material, the stripper acts as an additional reaction section within which cracking and drying can occur. As this material progresses through the stripper, additional cracking reactions occur. For this reason, plug flow behavior is extremely desirable in the stripper in order to minimize the amount of crackable material sent to the burner or heater as hydrocarbon carryunder, where it is effectively downgraded to coke. With basic fluid cokers, unlike Flexicokers, this phenomenon is not greatly disadvantageous as the quantities are small but in the case of Flexicokers, this material is sent to the heater, where it is exposed to a high temperature, oxygen poor environment. Unreacted material that enters the heater can crack to form a full range of vapor phase products. These products are then carried up into the heater overhead where they can condense onto surfaces resulting in capacity and/or run length limitations.

While carryunder is not a major concern for fluid coking units, these units do experience a different type of concern arising from operation of the stripper. Conventionally, the stripper section has a number of baffles, usually termed "sheds" from their shape in the form of inverted channel sections extending longitudinally in several superimposed rows or tiers across the body of the stripper. The coke passes over these sheds during its downward passage through the stripper and is exposed to the steam which enters from the sparger at the bottom of the vessel below the sheds. As the steam moves up the stripper it becomes redistributed Severe fouling of the stripper sheds can occur in both fluid and Flexicoking units, resulting in the formation of large coke deposits on the shed tops that can restrict flow and eventually lead to unplanned capacity loss. The mechanism postulated for their formation is that a portion of the coke is immobilized in a quiescent/dead zone, like the top of a stripper shed, and a thin film of liquid (unconverted and partially converted feed material) on the coke causes the coke particle to stick loosely to other particles and/or the stripper shed surface. A portion of the wet film is converted to coke, binding the coke particles together. Over time, hydrocarbon species from the vapor phase condense in the interstices between the particles, creating a very hard and difficult to remove deposit. The deposits which build up take on a characteristic shape by which they are named "shark fins". The reduction in flow area caused by these deposits makes the stripper vulnerable and reduced clearances can trap rubble spalled during a thermal cycle. If sufficiently large, the shark fins interrupt the coke circulation in the stripper section. Poor stripper hydrodynamics in the unit may reduce unit capacity and eventually lead to a shutdown of the reactor.

Attempts have previously been made to overcome this problem with varying degrees of success. For example, strippers have been fitted with steam spargers located underneath the stripper sheds, as reported by Hsiaotao Bi et al in "Flooding of Gas-Solids Countercurrent Flow in Fluidized Beds", In Eng. Chem. Res. 2004, 43, 5611-5619. Sheds with apertures at set intervals have also been used, with spargers supplying a constant steam flow to the holes to reduce fouling. It has been found, however, that such shed holes may become fouled, possibly as a result of poor steam distribution. The effect of differing shed configurations on stripper flooding is discussed in the Bi et al US 2 865 847, US 2 886 510 and DE 1 001 789 disclose the use of a reactor vessel in a fluid coking unit.

In spite of these efforts, an improved stripper shed configuration would be desirable, combining the attributes of long term resistance to fouling as well as resistance to flooding and good interstitial performance.

### SUMMARY OF THE INVENTION

We have now devised the use of an improved configuration for the stripper sheds of fluid coking units as disclosed in independent claim 1 and dependent claims 2 and 3. With the inverted-V channels, a downwardly projecting lip is provided on each side of the channel at or near the outer edge of the channel, extending from the bottom edge of the channel to promote the desired gas flow through the apertures to inhibit fouling.

The arrangement for the installation according to the invention is for the sheds in alternate pairs of tiers at successively vertical locations in the stripper to be rotated angularly with respect to one another by 90°. The purpose of this change is to provide a more tortuous path for the solids and to allow the gas to redistribute itself at each level. Additionally, if fouling of the sheds were to occur, a larger open area will be retained for the circulation of coke.

A fluid coking unit comprises a reactor vessel and a heater with a stripping section at the bottom of the reactor vessel including horizontally arrayed, sparged stripping sheds disposed in vertically spaced tiers for stripping occluded hydrocarbons from coke product. Each stripper shed is in the form of an open-bottomed, apertured channel having its apex upwards and terminating towards the outer edges in a downwards direction. The stripper sheds have an inverted -V section comprising a pair of flat sides extending downwards from the apex of the V where the two sides meet to bottom edges that run parallel to the apex with a flat lip extending downwards from the bottom edge of each side to increase the chamber defined by the section; each side has a row of apertures offset from the apex by a distance which is preferably 10 to 35% of the width of the side. The total area of the apertures relative to the total surface area of each side (including apertures) is in the range of 0.1 to 2 percent of the surface area of the sides.

### DRAWINGS

In the accompanying drawings:
Figure 1 is simplified diagram of a typical reactor of a fluid coking unit.
Figure 2 is a schematic side view of a stripper shed design in accordance with the present invention.
Figure 3 is a schematic top view of a stripper shed design in accordance with the present invention.
Figure 4 is a schematic showing the stripper sheds in a cross-hatched arrangement.
Figure 5 is a schematic of parallel and cross-hatched shed configurations evaluated in cold flow testing.
Figure 6 is a graph showing the results in cold flow testing of the stripping efficiency for the three different configurations of stripping shed.
Figure 7 is a graph showing the effect of stripper shed design and configuration on the average bubble fraction and bed density in the stripper.

### DETAILED DESCRIPTION

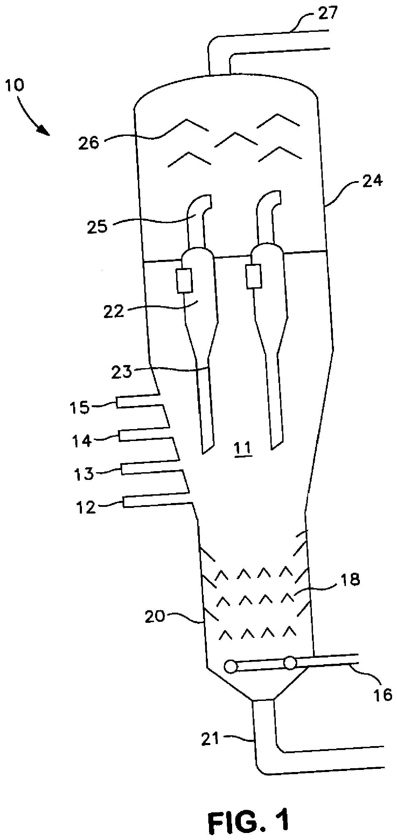

In Figure 1 which is a highly simplified diagram of the reactor of a fluid coking unit, the reactor 10 contains a fluidized bed in coking zone 11 of heated seed coke particles into which the feedstock, heated to a temperature sufficient to initiate the coking (thermal cracking) reactions and deposit a fresh coke layer on the hot fluidized coke particles circulating in the bed. The feed is injected through a ring of feed injection ports 12, 13, 14, 15 which are positioned so that the feed with the atomizing steam enters directly into the fluidized bed 11 of hot coke particles. A fluidizing gas, usually steam, is admitted at the base of coker reactor 10, through conduit 16, into stripping zone 20 of the coking reactor in an amount sufficient to obtain a superficial fluidizing velocity in the coking zone, typically in the range of about 0.15 to 1.5 m/sec (about 0.5 to 5 ft/sec). The coking zone is typically maintained at temperatures in the range of 450 to 650° C (about 840 to 1200°F) and a pressure in the range of about 0 to 1000 kPag (about 0 to 145 psig), preferably about 30 to 300 kPag (about 5 to 45 psig), resulting in the characteristic conversion products which include a vapor fraction and coke which is deposited on the surface of the seed coke particles. The vaporous products of the cracking reactions with entrained smaller coke particles pass upwards out of the dense phase reaction zone, through a phase transition zone and finally, a dilute phase reaction zone to the inlet of cyclones (only two shown, one indicated at 22). The smaller coke particles separated from the vaporous coking products in the cyclones are returned to the fluidized bed of coke particles through cyclone dipleg(s) 23 while the vapors pass out into scrubbing section 24 by way of cyclone gas outlet(s) 25. After passing through scrubbing section 24 fitted with scrubbing sheds 26, the vapors leave the reactor section through conduit 27 to the product fractionator (not shown). In the product fractionator, the conversion products are fractionated into light streams such as naphtha, intermediate boiling streams such as light gas oils and heavy streams including product bottoms. If desired, a stream of heavy materials condensed in the scrubber may be recycled to coking reactor 10.

The heavier coke particles that pass downwards from reactor section 11 to stripper section 20 are partially stripped of occluded hydrocarbons in stripping zone 20 by use of a stripping gas, usually steam, which enters via a sparger at the bottom of the stripping section on the end of line 16. The stripped coke particles are passed via line 21 to the heater (not shown) which is operated a temperature from about 40° to 200°C, preferably about 65° to 175°C, and more preferably about 65 to 120°C in excess of the actual operating temperature of the coking zone. The portion of the stripped coke that is not burned to satisfy the heat requirements of the coking zone may be recycled to the coking zone or withdrawn as product coke. If the unit is a Flexicoking unit, the gasifier section follows the heater with flow connections for the coke, return coke and gas flows.

Heavy petroleum feeds which may be treated in the fluid coking process include heavy hydrocarbonaceous oils, heavy and reduced petroleum crude oil, petroleum atmospheric distillation bottoms, petroleum vacuum distillation bottoms, or residuum, pitch, asphalt, bitumen, other heavy hydrocarbon residues, tar sand oil, shale oil, coal, coal slurries, liquid products derived from coal liquefaction processes, including coal liquefaction bottoms, and mixtures thereof. Such feeds will typically have a Conradson carbon content (ASTM D189 - 06e2) of at least about 5 wt. %, generally from about 5 to 50 wt. %. The preferred feed is a petroleum vacuum residuum (resid).

The stripper sheds 18 in stripping section 20 comprise inverted-V shape, open-bottomed longitudinal channels extending horizontally across the stripper section. Baffles extending inwards from the side walls of the stripper section direct the descending solids flow onto the stripper sheds. Typically, the sheds are arranged side-by-side one another at each vertically-spaced row or tier, with a sufficient lateral gap between them to allow for solids flow downwards and gas flow upwards. The present stripper sheds utilize the stripping steam effectively to inhibit the formation of fouling deposits, especially on the top portion of the sheds where the 'shark fins" are most apt to form.

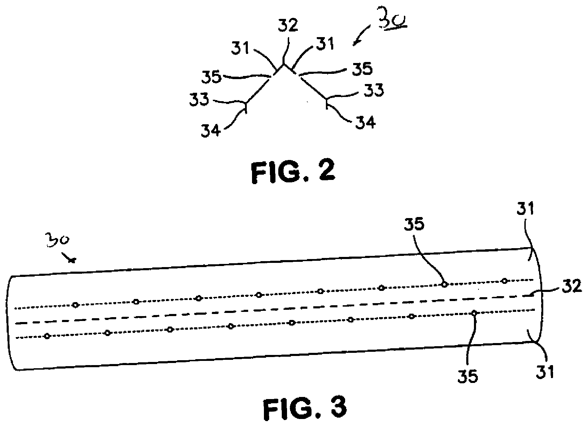

Figures 2 and 3 show the configuration according to the invention for a stripper shed. Fig. 2 shows the side elevation of the shed 30 in the form of an inverted-V comprising a pair of apertured flat sides 31, 31 extending downwards from the apex 32 of the V where the two sides meet to bottom edges 33 which, as shown in Fig. 3, run parallel to the apex. A flat lip 34 extends downwards from the bottom edge 33 of each side 31 to increase the chamber defined by the section. The apertures in both sides extend along each side in a row parallel to the apex with the centers of the apertures spaced from the apex. Then flat sided configuration tends to avoid the flow separation of the stripping gas stream which is likely to take place with inverted half-pipes and other curved sections with a potential for fouling in dead spots following the region of flow separation if the apertures are not suitably placed.

The downwardly extensive lips are provided at the bottom edges of the sides as shown in Figs. 2 and 3. The purpose of the downwardly extensive portion of the section is to confine and direct the upward flow of the stripping gas into and through the apertures from the open-bottomed chamber defined by the shed section. With the inverted half-pipe configuration, the downward arc of the section will provide the desired gas confinement.

The dimensions of the sheds will need to be determined empirically depending on the physical size of the reactor and the capacity, principally the design solids flow rate. Typically, the width of the sides (apex to bottom edge) will be from about 20 to 50 cm, in most cases from 25 to 40 cm, with 30-40 cm representing a practically useful range for most units.

The apertures may be of any convenient shape although circular apertures will normally be preferred for convenience of fabrication. Other apertures or holes such as rectangular or oval might also be used. If slots are used, they preferably extend with their longitudinal axis parallel to the apex of the shed. The maximum lateral dimension of the apertures (perpendicular to the longitudinal axis of the shed) will typically extend over 5 to 20%, preferably from 10 to 15%, of the width of the side, measured from the apex to the bottom (excluding the lip). Thus, for example, a shed section with sides of 35 cm will typically have circular holes of 1.75 to 7 cm, preferably 3.5 to 5.25 cm, diameter. The apertures are located in the upper half of each side closer to the apex, in order to minimize dead zones near the apex. The offset from the apex is the range of 10 to 35% of the width of the side, measured at the center of the aperture. Thus, for example, the shed section mentioned above with sides of 35 cm will typically have circular holes located at an offset of 3.5 to 10.5 cm. from the apex, measured from the apex to the centerline of the holes.

The total area of the apertures relative to the total surface area of each side is a compromise between the desire to maximize the number holes present on each shed (thereby minimizing the size of the shed top dead zones) and the need to keep the holes from plugging. Typically, the total area of the apertures relative to the total surface area of each side (including apertures) from about 0.1 to 2 percent of the surface area, preferably about 0.25 to 0.5 percent of the surface area. The intervals between the apertures will then be selected according to the desired relative area for the apertures.

The lip extensions below the bottom edges of the sides are important elements of the shed, increasing the driving force for the gas flow through the apertures. For a typical shed the lips will be about 10 to 30 percent, preferably 15 to 25 percent, of the width (apex to bottom) of the sides although this may need to be varied depending upon the height of the stripper section available. Longer lips within these ranges are preferred in order to maximize their effect on gas flow through the apertures. Thus a typical shed with sides of 30-40 cm, the lips may extend from about 3 to 12 cm below the bottom edge of the sides and with a shed with sides of about 35 cm., the lips extend preferably about 8 cm below the bottom edges of the sides. Again, however, the specific dimensions adopted for the lip height (bottom of side to bottom of lip) may be determined along with the dimensions of the apertures and aperture locations for each specific application to ensure that there is sufficient pressure drop across the holes, using the guideline that the pressure drop must be greater than the pressure fluctuations normally found within the stripper.

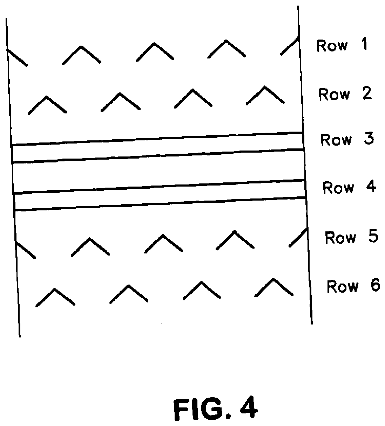

The arrangement of the sheds in the stripper has also been found to be significant in achieving better gas flow characteristics. According to the invention the sheds are arranged in pairs of rows with each pair at right angles to the adjacent pair, an arrangement referred to here as "cross-hatched". Fig. 4 shows an example of this type of arrangement with alternate pairs of shed rows rotated relative to one another by 90°. The purpose of this change is to provide a more tortuous path for the solids and to allow the gas to redistribute itself at each level. A typical gap between adjacent sheds in a row is from about 80 to 120 percent, preferably 90 to 110 percent of the total width of the shed so that sheds with a width of about 50 cm would to be spaced about 40 to 60 cm, preferably 45 to 55 cm., apart.

The stripper section, conventionally circular in cross section, may be provided with a baffle on the side wall to direct the coke inwards towards and onto the sheds. Although the flow dynamics of each reactor may be taken into consideration in the construction of the baffles, an annular configuration is normally satisfactory at the top of the stripper to direct the coke flow onto the first tier of stripper sheds but successive baffles may be in the form of partial (chordal) sheds extending along the side walls of the stripper section and aligned with the sheds in the next tier below the baffles. A single baffle may be provide above the stripper section and this may suitably be positioned about 2m. (about 7 ft.) above the entrance to the stripper so as to direct solids inward closer to the center of the stripper. The baffle may be apertured in a manner similar to that of the sheds in order to allow gas flow through the coke as it flows down over the baffle.

The configuration according to the invention of the tiers similar to that shown in Figure 4 with the sheds arranged in pairs with the longitudinal axes of the sheds are rotated at right angles, relative to the sheds in other alternate tiers. This arrangement provides a more tortuous path for the solids and allows the gas to redistribute itself as it ascends the stripper so leading to improved stripping by avoiding by-passing. Additionally, the open area retained for the circulation of coke is increased, so minimizing the effect of any fouling which might occur.

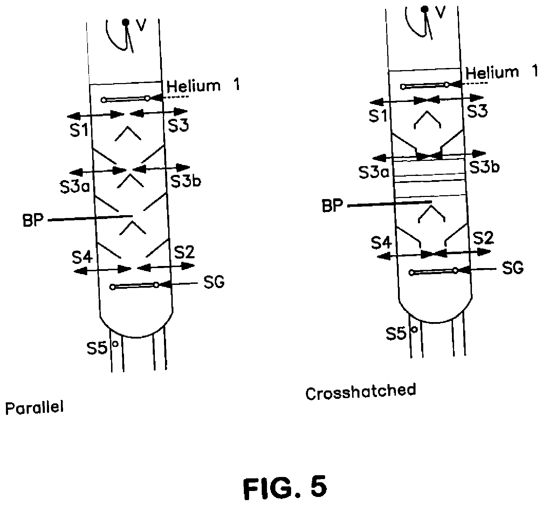

Cold flow testing was conducted to assess the merits each design option. Three configurations were tested using conditions that bracket the normal range of operations for the superficial gas velocity and the solids flux. Coke from a commercial Flexicoker was used for the solids phase. The testing unit consisted of a 91 cm (3 ft) ID vessel with a 3m (10 ft) maximum bed level, containing 6 shed rows, shown in Figure 5. The solids were fed to the fluidized bed representing the stripper through a trickle valve which distributed the solids towards one wall. Stripping gas was introduced through stripping gas inlet SG. Three configurations were evaluated: the present shed design installed in cross-hatched configuration, which was compared with sheds without no holes installed in parallel and cross-hatched arrangements. Several measurements were taken for each configuration to test solids flow patterns, bubble flow patterns measured with a bubble probe BP above the first tier of sheds from the bottom. Stripping efficiency was also measured with a helium tracer introduced through a helium duct above the sheds.

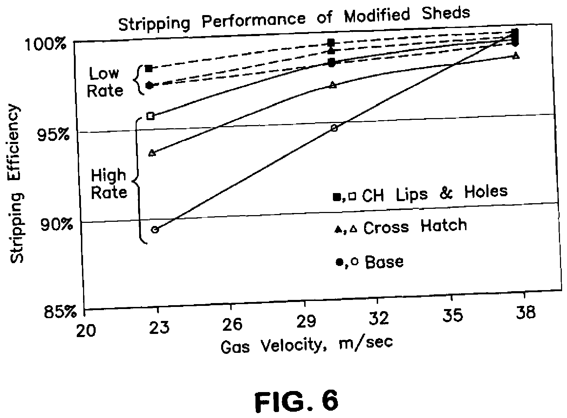

Figure 6 shows the stripping efficiency results for the three different configurations over a range of stripping gas velocities from 23 to 38 cm sec. (about 0.75 to 1.25 ft/sec) for solids fluxes of 44 kg/m²/sec (low flux rate) and 73.4 kg/m²/sec (high flux rate) (about 9 lbs/ft²/s and 15 lbs/ft²/s). The stripping efficiency was measured at 145 cm (about 57 inches) into the fluid bed.

In this graph, the stripping efficiency of the cross-hatched sheds with lips and holes is almost always consistently better than the stripping efficiency for cross-hatching alone or parallel sheds without lips and holes. The improved hydrocarbon stripping with the cross-hatched lips and holes configuration should lead to reduce shed fouling and/or allow for the reduction of stripping steam. Additionally the effective stripping observed at high solids loadings 73.4 kg/m²/sec (15 lbs/ft²/s) enables increased reactor solids circulation. The enhanced stripping efficiency was verified by means of helium tracer experiments in which the He concentration profiles showed improved removal of the tracer with the cross-hatched sheds with lips and holes at different stripping gas rates.

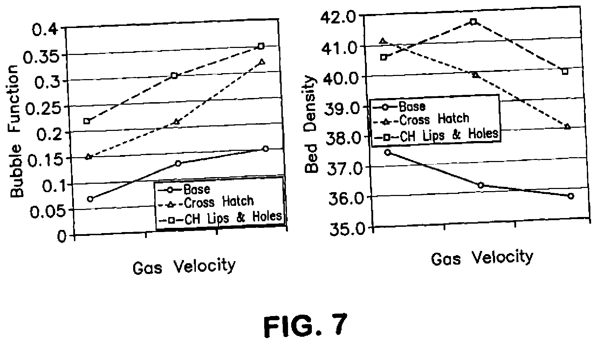

Changes in the hydrodynamics of the stripper resulting from the change in shed design and configuration are shown in Figure 7 as bubble fraction and bed density. Increased bubble fraction at fixed superficial velocity indicates smaller mean bubble size. Smaller bubbles afford more surface area per unit volume thus increasing the interfacial area for mass transfer: smaller bubbles lead to less back mixing and reduced carryunder. The observed increase in apparent bed density seemingly runs contrary to the observed increase in bubble holdup although this counter-intuitive effect can be explained by noting that the presence of steam holes/cross-hatching activates poorly fluidized regions in the bed so that more of the bed volume contributes to the apparent density.

The improvements resulting from the change in the shed design and the installation configuration are two-fold: both an increase in stripping efficiency as well as more plug flow performance for the stripper residence time distribution.

## Claims

1. Use of a reactor vessel (10) in a fluid coking unit comprising said reactor and a heater wherein the reactor vessel comprises a stripping section (20) at its bottom for stripping occluded hydrocarbons from coke product, said stripping section including horizontally arrayed, sparged stripping sheds (18, 30) disposed in vertically spaced tiers in each of which the sheds are disposed parallel to one another and with the sheds arranged in pairs of tiers at successively vertical locations in the stripper rotated angularly from the sheds in an adjacent pair of tiers by 90°, each stripper shed being in the form of an inverted-V section comprising a pair of flat sides extending downwards from the apex of the V where the two sides meet to bottom edges that run parallel to the apex with a flat lip (34) extending downwards from the bottom edge of each side to increase the chamber defined by the section, each side having a row of apertures (35) offset from the apex by 10 to 35% of the width of the side, at the center of each aperture, the total area of the apertures relative to the total surface area of each side, including apertures, being from 0.1 to 2 percent of the surface area of the sides.

2. Use according to claim 1 in which the lip extensions extend below the bottom edges of the sides to a distance of 10 to 30 percent of the width of the side, apex to bottom edge.

3. Use according to claim 2 in which the lip extensions extend below the bottom edges of the sides to a distance of 15 to 25 percent of the width of the side, apex to bottom edge.

## Patentansprüche

1. Verwendung eines Reaktorbehälters (10) in einer verwirbelnden Verkokungseinheit, die den Reaktor und eine Heizvorrichtung umfasst, wobei der Reaktorbehälter an seinem Boden einen Abstreifabschnitt (20) zum Abstreifen anhaftender Kohlenwasserstoffe aus dem Verkokungsprodukt umfasst, wobei der Abstreifabschnitt horizontal angeordnete, durchblasene Abstreiffächer (18, 30) enthält, die in vertikal verteilten Stufen angeordnet sind, wobei in jeder von diesen die Fächer parallel zueinander angeordnet sind und die Fächer in Paaren von Stufen an aufeinanderfolgenden vertikalen Positionen im Abstreifer angebracht sind, die von den Fächern in einem benachbarten Paar von Stufen um 90° winkelförmig gedreht sind, wobei jeder Abstreiffächer die Form eines umgedrehten V-Schnitts aufweist, der ein Paar von flachen Seiten umfasst, die sich abwärts von der Spitze des V, wo die beiden Seiten zusammentreffen, zu Unterkanten erstrecken, die parallel zur Spitze mit einer flachen Lippe (34) verlaufen, welche sich abwärts von der Unterkante jeder Seite erstreckt, um die durch den Abschnitt definierte Kammer zu vergrößern, wobei jede Seite eine Reihe von Öffnungen (35) abgesetzt von der Spitze um 10 bis 35% der Breite der Seite ausgehend von der Mitte jeder Öffnung aufweist, wobei die Gesamtfläche der Öffnungen relativ zu der Gesamtoberfläche jeder Seite, einschließlich der Öffnungen, 0.1% bis 2% der Oberfläche der Seiten beträgt.

2. Verwendung nach Anspruch 1, in der sich die Lippenerweiterungen unterhalb der Unterkanten der Seiten bis zu einem Abstand von 10% bis 30% der Breite der Seite von der Kegelspitze zur Unterkante erstrecken.

3. Verwendung nach Anspruch 2, in der sich die Lippenerweiterungen unterhalb der Unterkanten der Seiten bis zu einem Abstand von 15% bis 25% der Breite der Seite von der Kegelspitze zur Unterkante erstrecken.

## Revendications

1. Utilisation d'une cuve de réacteur (10) dans une unité de cokéfaction fluide comprenant ledit réacteur et un dispositif de chauffage, la cuve de réacteur comprenant une section de rectification (20) au niveau de son fond pour la rectification d'hydrocarbures occlus à partir d'un produit de coke, ladite section de rectification comprenant, disposées horizontalement en réseau, des colonnes de rectification (18, 30) disposées à des niveaux verticalement espacés dans chacun desquels les colonnes sont disposées parallèlement les unes par rapport aux autres et avec les colonnes disposées en paires de niveaux à des emplacements successivement verticaux dans le rectificateur tourné angulairement par rapport aux colonnes dans une paire adjacente de niveaux de 90°, chaque colonne de rectification se présentant sous la forme d'une section en V inversé comprenant une paire de côtés plats s'étendant vers le bas à partir du sommet du V où les deux côtés se rejoignent jusqu'à des bords inférieurs qui s'étendent parallèlement au sommet avec une lèvre plate (34) s'étendant vers le bas à partir du bord inférieur de chaque côté pour augmenter la chambre définie par la section, chaque côté ayant une rangée d'ouvertures (35) décalée par rapport au sommet de 10 à 35 % de la largeur du côté, au centre de chaque ouverture, la surface totale des ouvertures par rapport à la surface totale de chaque côté, comprenant des ouvertures, étant de 0,1 à 2 pour cent de la surface des côtés.

2. Utilisation selon la revendication 1, dans laquelle les extensions de lèvre s'étendent en dessous des bords inférieurs des côtés à une distance de 10 à 30 pour cent de la largeur du bord, du sommet au bord inférieur.

3. Utilisation selon la revendication 2, dans laquelle les extensions de lèvre s'étendent en dessous des bords inférieurs des côtés à une distance de 15 à 25 pour cent de la largeur du bord, du sommet au bord inférieur.
